# EUROPEAN PATENT APPLICATION

(11) **EP 2 442 540 A1**
(43) Date of publication of application: **18.04.2012**
(21) Application number: 10786205.4
(22) Date of filing: 10.06.2010
(51) Int. Cl.: H04M 3/00, H04W 4/02, H04W 64/00, H04W 92/12

(54) **MOBILE COMMUNICATION METHOD, MOBILE COMMUNICATION SYSTEM, EXCHANGE, SERVER APPARATUS AND RADIO BASE STATION**

(30) Priority: 12.06.2009 JP 2009141700
(71) Applicant: NTT DOCOMO, INC., Chiyoda-ku Tokyo 100-6150 (JP)
(72) Inventor: NISHIDA, Katsutoshi, Tokyo 100-6150 (JP); AOYAMA, Shinya, Tokyo 100-6150 (JP); MIAO, Zhen, Tokyo 100-6150 (JP); HAPSARI, Wuri Andarmawanti, Tokyo 100-6150 (JP)
(74) Representative: HOFFMANN EITLE
(86) International application number: PCT/JP2010/059809
(87) International publication number: WO 2010/143674

(57) **Abstract**

A radio base station according to the present invention comprising a mobile switching center MME, comprising, a location measurement request transmission unit configured to determine the mobile station location measurement type that must be performed corresponding to Provide Subscriber Location, the location measurement request transmission unit configured to transmit Location Request to the server device ESMLC when a determination is made to perform location measurement other than simple location measurement on the mobile station UE corresponding to Provide Subscriber Location, and a location measurement result transmission unit configured to transmit the mobile station location measurement result received from the radio base station eNB. or the second server device ESMLC to the server device SMLC.

## Description

### TECHNICAL FIELD

The present invention relates to a mobile communication method, a mobile communication system, a mobile switching center, a server device, and a radio base station.

### BACKGROUND ART

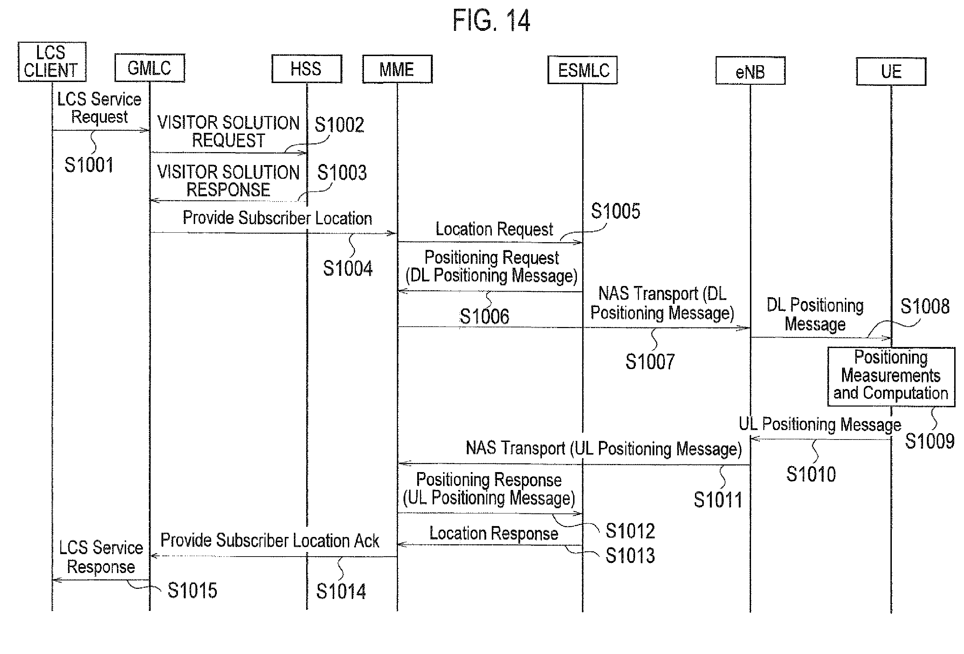

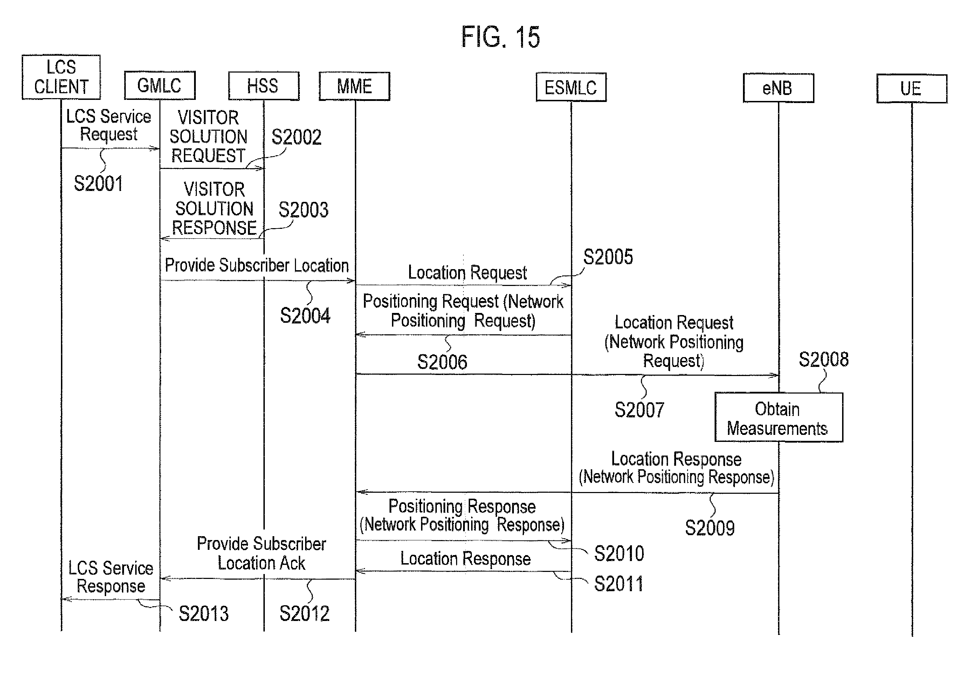

The operation of LCS (Location Service) for a mobile communication system using the conventional LTE (Long Term Evolution) scheme is described, with reference to Fig. 14 and Fig. 15.

First, the operation when the mobile station UE is involved in the mobile station UE location measurement procedure is described, with reference to Fig. 14.

As shown in step S1001 in Fig. 14, the LCS client transmits a "LCS Service Request" requesting a mobile station UE location measurement result from the server device GMLC (Gateway Mobile Location Center).

In step S1002, the server device GMLC transmits a visitor solution request inquiring a visitor area of the mobile station UE to the server device HSS (Home Subscribe Server). In step S1003, the server device HSS transmits a visitor solution response notifying the visitor area of the mobile station UE to the server device GMLC.

In step S1004, the server device GMLC transmits the "Provide Subcriber Location" to the mobile switching center MME managing the visitor area of the mobile station UE. In step S1005, the mobile switching center MME transfers the "Location Request" to the server device ESMLC (Evolved Serving Mobile Lication Center).

In step S1006, the server device ESMLC transmits the "Positioning Request" containing the "DL Positioning Message" corresponding to the received "Location Request" to the mobile switching center MME.

In step S1007, the mobile switching center MME transmits the "NAS Transport" containing the "DL Positioning Message" received by the mobile station UE to the radio base station eNB.

In step S1008, the radio base station eNB. transmits the received "DL Positioning Message" to the mobile station UE.

In step S1009, the mobile station UE conducts positioning measurement on the mobile station UE corresponding to the received "DL Positioning Message", and in step S1010, transmits the "UL Positioning Message" containing the location measurement result to the radio base station eNB.

In step S1011, the radio base station eNB transmits the "NAS Transport" containing the received "UL Positioning Message" to the mobile switching center MME.

In step S1012, the mobile switching center MME transmits the "Positioning Response" containing the received "UL Positioning Message" to the server device ESMLC.

In step S1013, the server device ESMLC transmits the "Location Response" corresponding to the received "Positioning Response" to the mobile switching center MME and in step S1014, the mobile switching center MME transfers the "Provide Subcriber Location Ack" to the server device GMLC.

In step S1015, the server device GMLC transmits the "LCS Service Response" to the LCS client.

Second, the operation when the mobile station USE is not involved in the mobile station UE location measurement procedure is described, with reference to Fig. 15.

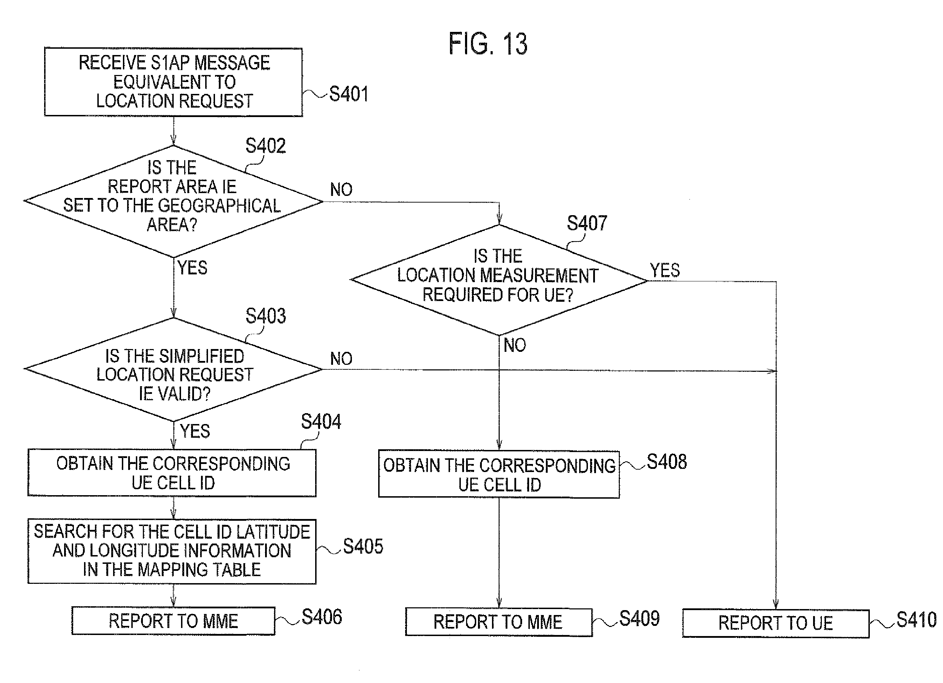

As shown in Fig. 15, the operations in steps S2001 to S2005 are identical to the operations in steps S1001 to S1005 shown in Fig. 13.

In step S2006, the server device ESMLC transmits the "Positioning Request" containing the "Network Positioning Request" corresponding to the received "Provide Subcriber Location" to the mobile switching center MME.

In step S2007, the mobile switching center MME transmits the "Location Request" containing the received "Network Positioning Message" to the radio base station eNB.

In step S2008, the radio base station eNB conducts simple location measurement on the mobile station UE and in step S2009, transmits the "Location Response" containing the "Network Positioning Request", which in turn contains the location measurement result to the mobile switching center MME.

In step S2010, the mobile switching center MME transmits the "Positioning Response" containing the received "Network Positioning Request" to the server device ESMLC.

In step S2011, the server device ESMLC transmits the "Location Response" corresponding to the received "Positioning Response" to the mobile switching center MME and in step S2012, the mobile switching center MME transfers the "Provide Subcriber Location Ack" to the server device GMLC.

In step S2013, the server device GMLC transmits the "LCS Service Response" to the LCS client.

### SUMMARY OF THE INVENTION

### PROBLEMS TO BE SOLVED BY THE INVENTION

However, as shown in Fig. 15, even if performing simple location measurement not involving a complex calculation, the server device ESMLC must transmit the "Positioning Response" corresponding to the "Location Request" received from the mobile switching center MME and must transmit the "Location Response" corresponding to the "Positioning Response" received from the mobile switching station MME.

Therefore, if the number of requests requesting simple location measurement of the mobile station UE increases, there is a problem in that the processing load for the abovementioned transmission processing increases, regardless of the processing load leading to the mobile station UE location measurement result on the server device ESMLC.

Therefore, the present invention has been achieved in view of the abovementioned problems, and an object thereof is to provide a mobile communication method, a mobile communication system, a mobile switching center, a server device, and a radio base station by which it is possible to reduce the processing load on the server device ESMLC when conducting simple location measurement on the radio base station eNB.

### MEANS FOR SOLVING THE PROBLEM

A gist of a first characteristic of the present invention is a mobile communication method, comprising a step in which a mobile switching center determines the location measurement type for a mobile station to be performed subject to a first measurement request, when such first measurement request is received from a first server device a step in which the mobile switching center transmits a second location measurement request to a radio base station when there is a determination to perform simple location measurement on the mobile station corresponding to the first location measurement request a step in which the mobile switching center transmits a second location measurement request to the second server device when there is a determination to perform location measurement other than simple location measurement for the mobile station corresponding to the first location measurement request a step in which the radio base station performs simple location measurement for the mobile station corresponding to the second measurement request received and transmits the location measurement result to the mobile switching center a step in which the second server device calculates the location measurement result for the mobile station corresponding to the second location measurement request received and transmits the location measurement result to the mobile switching center and a step in which the mobile switching center transmits the location measurement result received from the radio base station or the second server device to the first server device.

A gist of a second characteristic of the present invention is a mobile communication system, comprising: a first server device, a second server device a mobile switching center and a radio base station, in which the mobile switching center includes a determination unit configured to determine the mobile station location measurement type that should be performed corresponding to the first measurement request, when the first measurement request is received from the first server device, a location measurement request transmission unit configured to transmit the second location measurement request to the radio base station when a determination is made to perform simple location measurement on the mobile station corresponding to the first location measurement request and to transmit the second location measurement request to the second server device when a determination is made to perform location measurement other than simple location measurement on the mobile station corresponding to the first location measurement request and a location measurement result transmission unit configured to transmit the mobile station location measurement result received from the radio base station or the second server device to the first server device and the radio base station includes, a location measurement unit configured to perform simple location measurement on the mobile station corresponding to the second location measurement request received and a location measurement result transmission unit configured to transmit the location measurement result to the mobile switching center, and the second server device includes a calculation unit configured to calculate the location measurement result for the mobile station corresponding to the second location measurement request received and a location measurement result transmission unit configured to transmit the location measurement result to the mobile switching center.

A gist of a third characteristic of the present invention is a mobile switching center, comprising, a determination unit configured to determine the mobile station location measurement type that must be performed corresponding to the first measurement request, when the first measurement request is received from a first server device, a location measurement request transmission unit configured to transmit the second location measurement request to the radio base station when a determination is made to perform simple location measurement on the mobile station corresponding to the first location measurement request and to transmit the second location measurement request to the second server device when a determination is made to perform location measurement other than simple location measurement on the mobile station corresponding to the first location measurement request and a location measurement result transmission unit configured to transmit the mobile station location measurement result received from the radio base station or the second server device to the first server device.

A gist of a fourth characteristic of the present invention is a server device, comprising, a determination unit configured to determine the mobile station location measurement type to be performed corresponding to the measurement request when a measurement request is received from a request-source terminal, a location measurement request transmission unit configured to transmit a first location measurement request to request performance of the mobile station simple location measurement to the mobile switching center, when a determination is made to perform the mobile station simple location measurement corresponding to the location measurement request and a location measurement result transmission unit configured to transmit the mobile station location measurement result received from the mobile switching center to the request-source terminal.

A gist of a fifth characteristic of the present invention is a radio base station, comprising, a location measurement unit configured to obtain at least one of the identification information or latitude and longitude information of a visitor cell of the mobile station as location measurement for the mobile station, when a geographical area is set in the location measurement request received from the mobile switching center and a mobile station simple location measurement is requested by the location measurement request, a location measurement result transmission unit configured to transmit the mobile station location measurement result to the mobile switching center and an indicator unit configured to indicate performance of the mobile station location measurement for the mobile station, when a determination is made that location measurement is required for the mobile station when a geographical area is not set in the location measurement request received, in which the location measurement unit is configured to obtain the identification information of a visitor cell of the mobile station as the location measurement result for the mobile station when a determination is made that location measurement for the mobile station is not required when a geographical area is not set in the location measurement request received.

### EFFECT OF THE INVENTION

As described above, according to the present invention, it is possible to provide a mobile communication method, a mobile communication system, a mobile switching center, a server device, and a radio base station by which it is possible to reduce the processing load on the server device ESMLC when conducting simple location measurement on the radio base station eNB.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a GMLC functional block diagram according to the first embodiment of the present invention.
[Fig. 3] Fig. 3 is an MME functional block diagram according to the first embodiment of the present invention.
[Fig. 4] Fig. 4 is a diagram describing an example of the "Location Request" format transmitted by the MME according to the first embodiment of the present invention.
[Fig. 5] Fig. 5 is a diagram describing an example of the "Location Request" format transmitted by the MME according to the first embodiment of the present invention.
[Fig. 6] Fig. 6 is an eNB functional block diagram according to the first embodiment of the present invention.
[Fig. 7] Fig. 7 is a diagram describing an example of the "Location Response" format transmitted by the eNB according to the first embodiment of the present invention.
[Fig. 8] Fig. 8 is an ESMLC functional block diagram according to the first embodiment of the present invention.
[Fig. 9] Fig. 9 is a protocol configuration diagram of the mobile communication system according to the first embodiment of the present invention.
[Fig. 10] Pig. 10 is a sequence diagram showing the mobile communication system operation according to the first embodiment of the present invention.
[Fig. 11] Fig. 11 is a flowchart showing the GMLC operation according to the first embodiment of the present invention.
[Fig. 12] Fig. 12 is a flowchart showing the MME operation according to the first embodiment of the present invention.
[Fig. 13] Fig. 13 is a flowchart showing the eNB operation according to the first embodiment of the present invention.
[Fig. 14] Fig. 14 is a sequence diagram showing the operation of a conventional mobile communication system.
[Fig. 15] Fig. 15 is a sequence diagram showing the operation of a conventional mobile communication system.

### BEST MODES FOR CARRYING OUT THE INVENTION

### (Configuration of mobile communication system according to first embodiment of the present invention)

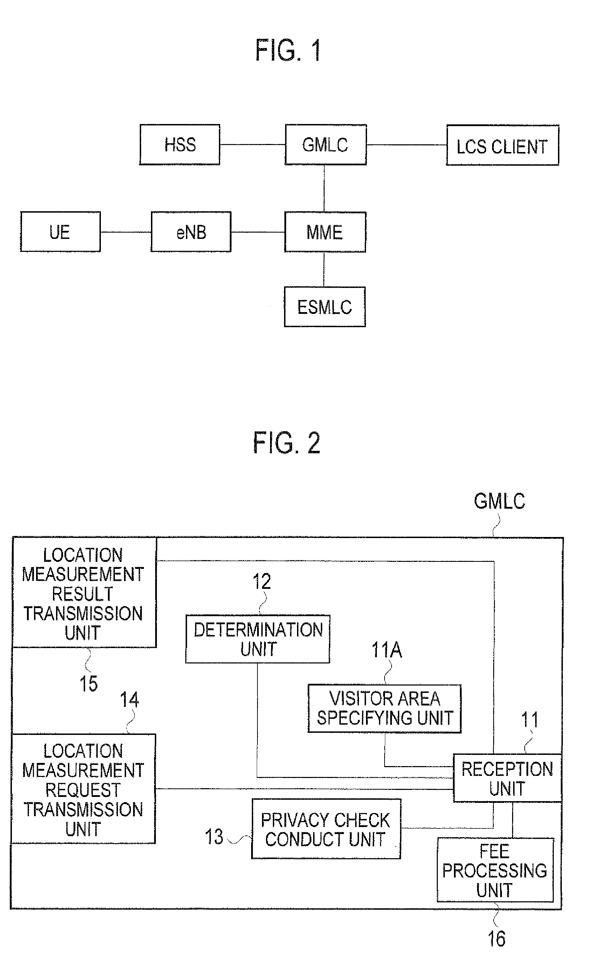

The mobile communication system according to the first embodiment of the present invention is described, with reference to Fig 1 to Fig. 5.

The mobile communication system according to this embodiment is an LTE-schemed mobile communication system, and is configured to be able to provide LCS, specifically, configured to be able to provide a location measurement result for the mobile station UE.

For example, the location measurement result for the mobile station UE includes location information of the mobile station UE, such as identification information of a visitor cell of the mobile station USE (cell ID), latitude and longitude information of a visitor cell of the mobile station UE, and distance information between the mobile station UE and the radio base station eNB.

As shown in Fig. 1, the mobile communication system according to this embodiment includes an LCS client, server device GMLC, server device HSS, server device ESMLC, mobile switching center MME and radio base station eNB.

As shown in Fig. 2, the server device GMLC includes a reception unit 11, a visitor area specifying unit 11A, a determination unit 12, a Privacy Check conduct unit 13, a location measurement request transmission unit 14, a location measurement result transmission unit 15, and a fee processing unit 16.

The reception unit 11 is configured to receive "LCS Service Request (location measurement requests)" requesting the location measurement result for the mobile station UE, from the LCS client.

Additionally, the reception unit 11 is configured to receive "Provide Subscriber Location Ack" notifying the location measurement result for the mobile station UE, from the mobile switching center MME.

The visitor area specifying unit 11A is configured to transmit the visitor solution request to the server device HSS when the reception unit 11 receives an "LCS Service Request", and to specify a visitor area of the mobile station UE (for example, a visitor mobile switching center MME by the mobile station UE) by receiving the visitor solution response from the server device HSS.

Here, the visitor area specifying unit 11A may be configured to transmit error responses to the LCS client if the mobile station UE visitor area cannot be specified.

The determination unit 12 is configured to determine the type of location measurement for the mobile station UE that is to be performed corresponding to the "LCS Service Request" received by the reception unit 11.

To be specific, the determination unit 12 may be configured to determine the type of location measurement for the mobile station UE that is to be performed corresponding to the "LCS Service Request" based on the "LCS Client ID" showing identification information for the LCS client requesting a location measurement result for the mobile station UE, the "LCS QoS" showing the required service quality for the location measurement result for the mobile station UE or at least one of the mobile station UE visitor areas.

For example, the determination unit 12 may be configured to determine to perform simple location measurement for the mobile station UE corresponding to the "LCS Service Request" if the LCS client type attached to the "LCS Client ID" is set to execute "simple location measurement".

Alternatively, the determination unit 12 is configured to determine that it is necessary to perform the simple location measurement on the mobile station UE in response to the "LCS Service Request" if the "Horizontal-Accuracy" and "Response Time Category" in the "LCS QoS" are satisfied with the "simple location measurement".

The Privacy Check conduct unit 13 is configured to conduct Privacy Checks for the mobile station UE.

To be specific, the Privacy Check conduct unit 13 is configured to determine whether or not the required Privacy conditions are met, based on a subscriber privacy profile and a visitor device (MME or eNB and the like) performance.

For example, the Privacy Check conduct unit 13 may be configured to determine that the required Privacy conditions are not satisfied if an "LCS Service Request" is received from a specific LCS client or if an "LCS Service Request" is received relating to the location measurement of a specific mobile station UE.

Additionally, the Privacy Check conduct unit 13 may be configured to set Privacy conditions for the visitor mobile switching center MME of the mobile station UE.

For example, as Privacy conditions, the Privacy Check conduct unit 13 can set whether or not to notify the execution of location measurement on the mobile station UE.

Upon determination that it is necessary to perform the simple location measurement on the mobile station UE in response to the "LCS Service Request", the location measurement request transmission unit 14 is configured to transmit the "Provide Subscriber Location (first location measurement request)" requesting to perform simple location measurement on the mobile station UE, to the mobile switching center MME.

To be specific, the location measurement request transmission unit 14 is configured to set the simple location measurement bit to the "Provide Subscriber Location" if a determination has been made to require performance of a mobile station UE simple location measurement corresponding to the "LCS Service Request".

Here, the abovementioned "LCS Client ID" and "LCS QoS" are included in the "Provide Subscriber Location".

The location measurement result transmission unit 15 is configured to transmit the location measurement result for the mobile station UE received from the mobile switching center MME to the LCS client.

To be specific, the location measurement result transmission unit 15 is configured to transmit the "LCS Service Response" containing the location measurement result for the mobile station UE received from the mobile switching center MME, to the LCS client.

The fee processing unit 16 is capable of billing the mobile station UE or the LCS client according to the success of failure of the mobile station UE location measurement. Also, the fee processing unit 16 may be configured to be capable of billing upon receipt of notification of the success or failure of the mobile station UE location measurement from the server device ESMLC.

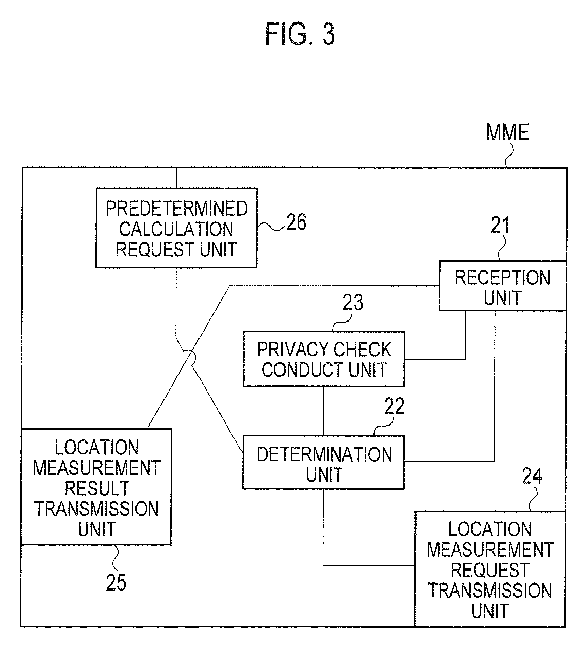

As shown in Fig. 3, the mobile switching center MME includes a reception unit 21, determination unit 22, a Privacy Check conduct unit 23, a location measurement request transmission unit 24, a location measurement result transmission unit 25, and a predetermined calculation request unit 26.

The reception unit 21 is configured to receive "Provide Subscriber Location" from the server device GMLC.

Additionally, the reception unit 21 is configured to receive "Location Response" containing the location measurement result for the mobile station UE, from the radio base station eNB or the server device ESMLC.

The determination unit 22 is configured to determine whether or not to receive the "Provide Subscriber Location" has been received by the reception unit 21.

Also, the determination unit 22 is configured to determine the type of location measurement for the mobile station UE to be performed according to the "Provide Subscriber Location" if it has been determined to receive the "Provide Subscriber Location" that has been received by the reception unit 21.

To be specific, the determination unit 22 may be configured to determine the type of location measurement for the mobile station UE that is to be performed corresponding to the "LCS Service Request" based on the "LCS Client ID" contained in the "Provide Subscriber Location", the "LCS QoS" contained in the "Provide Subscriber Location" or at least one of the mobile station UE visitor areas.

For example, the determination unit 22 is configured to determine that it is necessary to perform the simple location measurement on the mobile station UE in response to "LCS Service Request" in which the LCS client type to which "LCS Client ID" belongs is set to perform "simple location measurement".

Alternatively, the determination unit 22 is configured to determine that it is necessary to perform the simple location measurement on the mobile station UE in response to the "LCS Service Request" if the "Horizontal-Accuracy" and "Response Time Category" in the "LCS QoS" are satisfied with the "simple location measurement".

Additionally, the determination unit 22 may be configured to determine that the mobile station UE location measurement type designated by the "Provide Subscriber Location" is a mobile station UE location measurement type to be performed according to the "Provide Subscriber Location".

For example, the determination unit 22 may be configured to determine to perform mobile station UE simple location measurement according to the "LCS Service Request" if the simple location measurement bit is set in the "Provide Subscriber Location".

Also, the determination unit 22 is configured to determine whether or not to perform a predetermined calculation (detailed calculation for the location measurement result for the mobile station UE) based on the location measurement result received from the radio base station eNB.

The predetermined calculation request unit 26 is configured to transmit requests for the detailed calculation (detailed calculation request) to the server device ESMLC if the determination unit 22 determines that it is necessary to perform a detailed calculation on the mobile station UE location measurement result.

The Privacy Check conduct unit 23 is configured to conduct Privacy Checks for the mobile station UE.

To be specific, the Privacy Check conduct unit 23 is configured to determine whether or not the required Privacy conditions designated by the server device GMLC are met.

The location measurement request transmission unit 24 is configured to transmit the "Location Request (second location measurement request)" to the radio base station eNB if a determination has been made to require performance of a mobile station UE simple location measurement corresponding to the "Provide Subscriber Location".

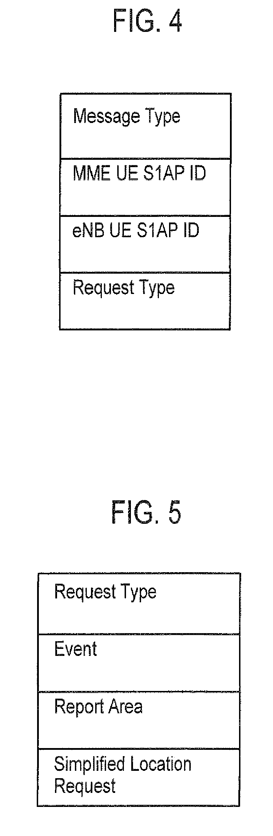

Fig. 4 and Fig. 5 show examples of the "Location Request" formats.

As shown in Fig. 4, "Message Type", "MME UE S1AP ID", "eNB UE S1AP ID" and "Request Type" may be included as information elements in the "Location Request".

As shown in Fig. 5, "Event", "Report Area", and "Simplified Location Request" are included as information elements in the information element "Request Type".

Alternatively, the location measurement request transmission unit 24 is configured to transmit the "Location Request (second location measurement request)" to the server device ESMLC if a determination has been made to require performance of a location measurement other than a mobile station UE simple location measurement corresponding to the "Provide Subscriber Location".

The location measurement result transmission unit 25 is configured to transmit the location measurement result for the mobile station UE received from the radio base station eNB or the server device ESMLC, to the server device GMLC.

To be specific, the location measurement result transmission unit 25 is configured to transmit the "Provide Subscriber Location Ack" containing the location measurement result for the mobile station UE received from the radio base station eNB or the server device ESMLC, to the server device GMLC.

Here, the location measurement result transmission unit 25 may be configured to transmit a predetermined calculation result (detailed calculation request) received from the server device ESMLC to the server device GMLC as a location measurement result for the mobile station UE.

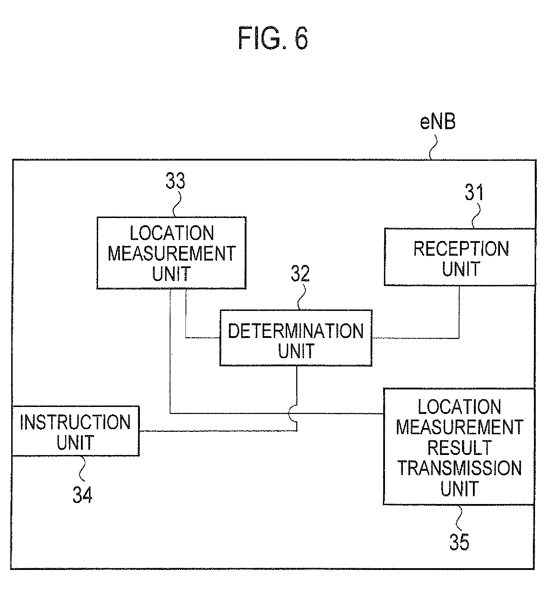

As shown in Fig. 6, the radio base station eNB includes a reception unit 31, determination unit 32, location measurement unit 33, instruction unit 34 and location measurement result transmission unit 35.

The reception unit 31 is configured to receive the "Location Request" from the mobile switching center MME.

The determination unit 32 is configured to determine if it is necessary to perform mobile station UE simple location measurement for the radio base station eNB or mobile station UE location measurement for the mobile station UE.

For example, the determination unit 32 is configured to determine if it is necessary to perform mobile station UE simple location measurement for the radio base station eNB if a mobile station UE simple location measurement is required by a "Location Request" where "Geographical Area" is set in the "Location Request" received by the reception unit 31 (that is, if the "Simplified Location Request" in the "Location Request" is valid).

Alternatively, the determination unit 32 is configured to determine that it is necessary to perform mobile station UE location measurement on the mobile station UE if it is determined necessary to perform mobile station UE location measurement when "Geographical Area" is not set in the "Location Request" received by the reception unit 31.

The location measurement unit 33 is configured to obtain at least one of identification information of a visitor cell of the mobile station UE or latitude and longitude information of a visitor cell of the mobile station UE, as the mobile station UE location measurement result, if the determination unit 32 determines that it is necessary to perform mobile station UE simple location measurement for the radio base station eNB.

The location measurement unit 33 may be configured to obtain identification information of the visitor cell of the mobile station UE as the mobile station UE location measurement result if the determination unit 32 determines location measurement for the mobile station UE is not necessary when "Geographical Area" is not set in the "Location Request" received from the reception unit 31.

The instruction unit 34 is configured to provide instruction on performing mobile station UE location measurement for the mobile station UE if the determination unit 32 determines it is necessary to perform mobile station UE simple location measurement for the mobile station UE.

The location measurement result transmission unit 35 is configured to transmit the location measurement result for the mobile station UE obtained by the location measurement unit 33, to the mobile switching center MME.

To be specific, the location measurement result transmission unit 35 is configured to transmit the "Location Response" containing the location measurement result for the mobile station UE obtained by the location measurement unit 33, to the mobile switching center MME.

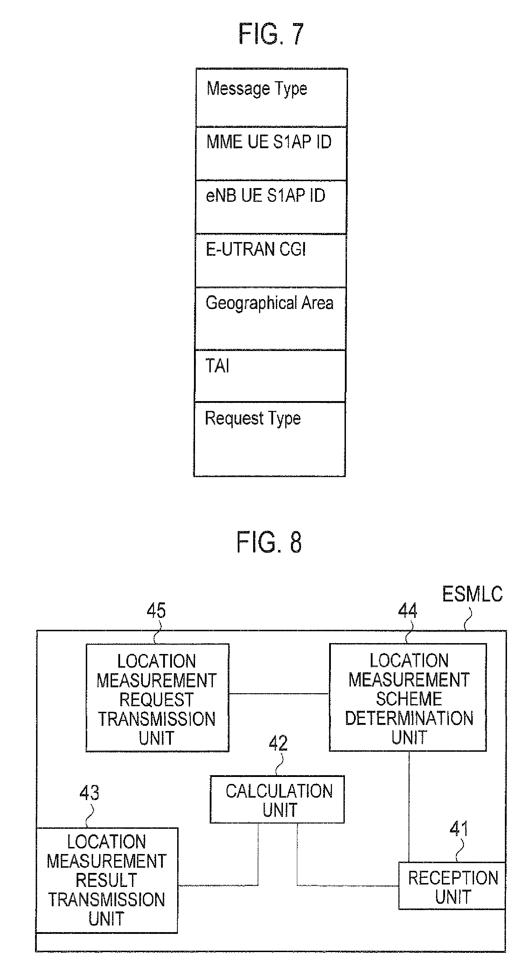

Fig. 7 and Pig. 5 show examples of the "Location Response" format.

As shown in Fig. 7, "Message Type", "MME UE S1AP ID", "eNB UE S1AP ID", "E-UTRAN CGI", "Geographical Area", "TAI" and "Request Type" are included as information elements in the "Location Request".

As shown in Fig. 5, "Event", "Report Area", and "Simplified Location Request" are included as information elements in the information element "Request Type".

As shown in Fig. 8, the server device ESMLC includes a reception unit 41, a calculation unit 42, a location measurement result transmission unit 43, a location measurement scheme determination unit 44, and a location measurement request transmission unit 45.

The reception unit 41 is configured to receive the "Location Request" and "Positioning Response" from the mobile switching center MME.

Additionally, the reception unit 41 is configured to receive the request from the mobile switching center MME for detailed calculation of the mobile station UE location measurement result.

Furthermore, the reception unit 41 determines whether it is necessary to perform the calculation of the location measurement result of the mobile station UE or to start the mobile station UE location measurement procedures based on the information elements in the "Loation Request" if a "Loation Request" was received.

The information elements may be, for example, the presence of absence of location measurement result information such as "Geographical Area" and the like, or may be bits that require detailed measurement information operations by the server device ESMLC, and the like.

The calculation unit 42 is configured to perform mobile station UE location measurement result calculations according to the "Provide Subscriber Location" received by the reception unit 41.

Also, the calculation unit 42 is configured to perform detailed operations according to the detailed operation requests for mobile station UE location measurement result received by the reception unit 41.

The location measurement result transmission unit 43 is configured to transmit a calculation result by the calculation unit 42 for the mobile switching center MME.

To be specific, the location measurement result transmission unit 43 is configured to transmit the "Location Response" containing calculation result for the location measurement result for the mobile station UE or detailed calculation responses containing the calculation result for the location measurement result for the mobile station UE, to the mobile switching center MME.

The location measurement scheme determination unit 44 is configured to determine what type of the location measurement schemes to be used if it has been determined to start the mobile station UE location measurement procedure with a "Loation Request" received by the reception unit 41.

Also, the location measurement scheme determination unit 44 is configured to notify the location measurement request transmission unit 45 to transmit the determined location measurement scheme to the mobile switching center MME.

The location measurement request transmission unit 45 is configured to transmit the "Positioning Request" for the mobile switching center MME based on notification of receipt from the location measurement scheme determination unit 44.

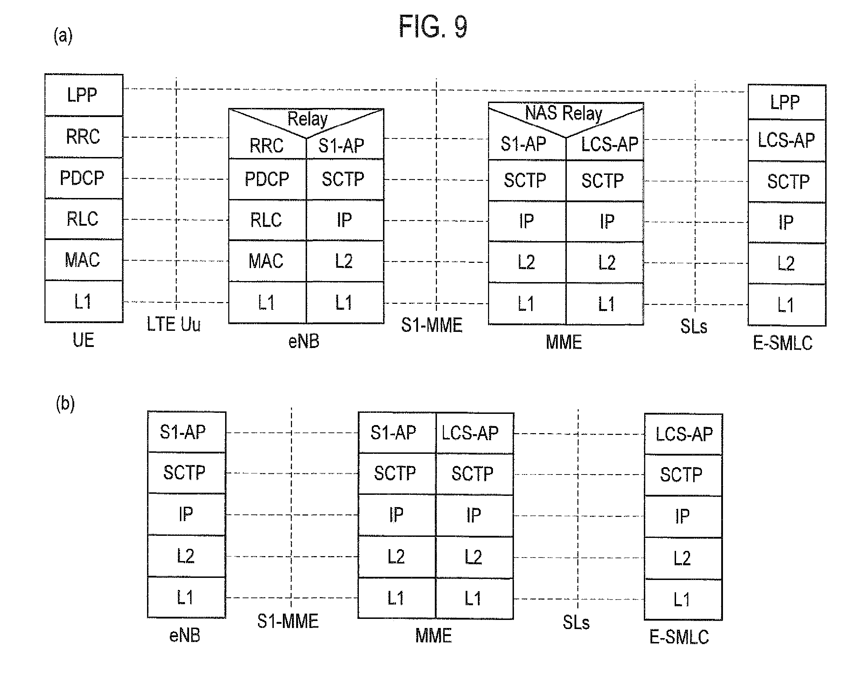

Fig. 9(a) and 9(b) show examples of the protocol stack used in the mobile communication system according to the embodiments of the present invention.

### (Operation of mobile communication system according to the first embodiment of the present invention)

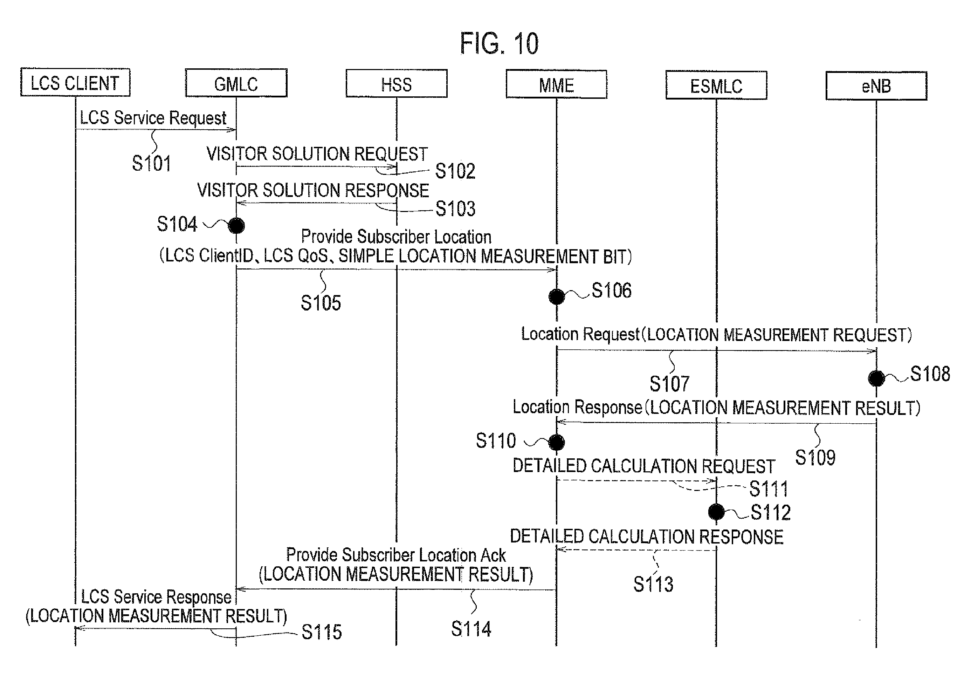

The operation of the mobile communication system according to this embodiment is described, with reference to Fig 10 to Fig. 13.

First, the operation conducting mobile station UE simple location measurement for the mobile communication system according to this embodiment, with reference to Fig. 10.

As shown in Fig. 10, the LCS client transmits the "LCS Service Request" requesting the location measurement result for the mobile station UE to the server device GMLC in step S101.

In step S102, the server device GMLC transmits a visitor solution request asking for the mobile station UE visitor area to the server device HSS. In step S103, the server device HSS transmits a visitor solution response that notifies the server device GMLC of the visitor area for the mobile station UE corresponding to the visitor solution request received.

In step S104, the server device GMLC determines that obtaining the location measurement result for the mobile station UE, which is acquired by the simple location measurement in the radio base station eNB, should be acquired, and transmits the "Provide Subcriber Location" to the mobile switching center MME that manages the visitor area of the mobile station UE in step S105.

This is where the "LCS Client ID", "LCS QoS" and "simple location measurement bit" are set in the "Provide Subcriber Location".

In step S106, the mobile switching center MME determines if it is necessary to perform mobile station UE simple location measurement, while in step S107, transmits the "Location Request" to the base radio station eNB.

In step S108, the radio base station eNB performs mobile station UE simple location measurement and in step S109, transmits the "Location Response" containing the location measurement result for the mobile station UE (for example, mobile station UE location information such as the latitude and longitude information of a visitor cell of the mobile station UE) obtained by the simple location measurement of the mobile station UE, to the mobile switching center MME.

In step S110, the mobile switching center MME determines if it is necessary to perform detailed calculations about the measurement result for the mobile station UE containing the received "Location Response", and transmits the detailed calculation request to the server device ESMLC in step S111.

In step S112, the server device ESMLC performs detailed calculation about the measurement result for the mobile station UE corresponding to the received detailed calculation request, and in step S113, transmits the detailed calculation response containing the detailed calculation result to the mobile switching center MME.

In step S114, the mobile switching center MME transmits the "Provide Subcriber Location Ack" containing the detailed calculation result for the location measurement result for the mobile station UE, to the server device GMLC.

In step S115, the server device GMLC transmits the "LCS Service Response" containing the detailed calculation result for the location measurement result for the mobile station UE, to the LCS client.

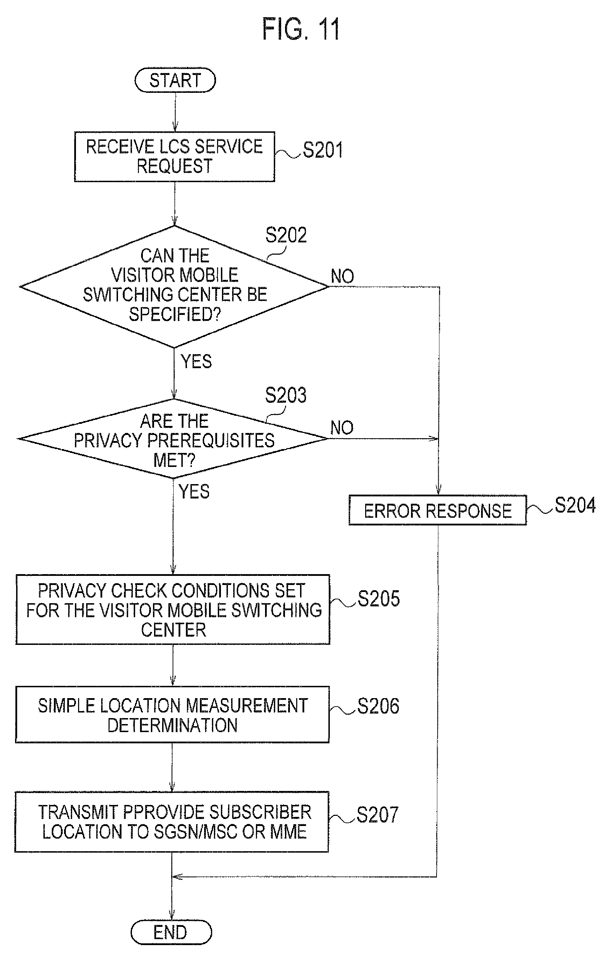

Second, the server device GMLC operation according to this embodiment is described, with reference to Fig. 11.

As shown in Fig. 11, the server device GMLC receives the "LCS Service Request" from the LCS client in step S201 and attempts to specify the visitor mobile switching center for the mobile station UE (for example, SGSN/MSC or MME) by transmitting the visitor solution request to the server device HSS in step S202.

If specifying the visitor mobile switching center for the mobile station UE is successful, this operation proceeds to step S203, while if specifying the visitor mobile switching center for the mobile station UE fails, this operation proceeds to step S204.

In step S203, the server device GMLC determines whether or not the required Privacy conditions are met.

If it is determined that the required Privacy conditions are met, this operation proceeds to step S205, while if it is determined that the required Privacy conditions are not met, this operation proceeds to step S204.

In step S204, the server device GMLC transmits the error response to the LCS client.

In step S205, the server device GMLC sets the Privacy conditions in the visitor mobile switching center.

In step S206, the server device GMLC determines whether or not a mobile station UE simple determination to be performed, and in step S207, the "Provide Subscriber Location" created based on the determination result is transmitted to the visitor mobile switching center for the mobile station UE.

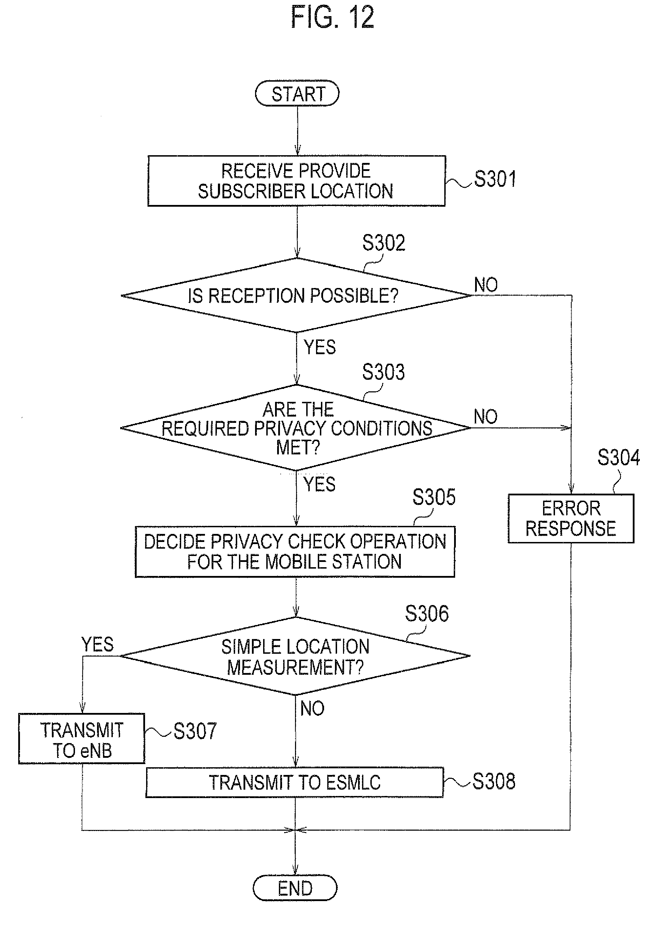

Third, the mobile switching center MME operation according to this embodiment) is described, with reference to Fig. 12.

As shown in Fig. 12, in step S301, if the mobile switching center MME receives the "Provide Subscriber Location" from the server device GMLC, then a determination is made whether or not it is possible to accept the "Provide Subscriber Location" in step S302.

Then, if a determination is made to accept the "Provide Subscriber Location", this operation proceeds to step S303, while if a determination is made that it is not possible to accept the "Provide Subscriber Location", this operation proceeds to step S304.

In step S303, the mobile switching center MME determines whether or not the required Privacy conditions are met.

If it is determined that the required Privacy conditions are met, this operation proceeds to step S305, while if it is determined that the required Privacy conditions are not met, this operation proceeds to step S304.

In step S304, the mobile switching center MME transmits the error response to the server device GMLC.

In step S305, the mobile switching center MME determines the Privacy Check operation (for example, the operation notifying the mobile station UE of the location measurement) for the mobile station UE.

In step S306, the mobile switching center MME determines whether or not to perform simple determination for the mobile station UE, and if it is determined to perform mobile station UE simple determination, this operation proceeds to step S307, otherwise this operation proceeds to step S308.

In step S307, the mobile switching center MME transmits the "Location Request" to the radio base station eNB, and in step S308, transmits the "Provide Subscriber Location" to the server device ESMLC.

Fourth, the radio base station eNB operation according to this embodiment is described, with reference to Fig. 13.

As shown in Fig. 13, in step S401, the radio base station eNB receives the "Location Request (S1AP message)" from the mobile switching center MME, and in step S402, determines whether or not "Geographical Area" is set in the information element "Report Area" in the "Location Request".

If it is determined to set "Geographical Area", this operation proceeds to step S403, while if it is determined not to set "Geographical Area", this operation proceeds to step S407.

In step S403, the radio base station eNB determines whether or not the information element "Simplified Location Request" in the "Location Request" is valid.

If it is determined that the information element "Simplified Location Request" is valid, this operation proceeds to step S404, while if it is determined that the information element "Simplified Location Request" is not valid, this operation proceeds to step S410.

In step S404, the radio base station eNB obtains identification information of a visitor cell of the mobile station UE (cell ID) from the database and the like, as the location measurement result for the mobile station UE.

In step S405, the radio base station eNB searches the mapping table for the latitude and longitude information corresponding to the cell ID and in step S406, transmits the "Location Response" containing the search result to the mobile switching center MME.

In step S407, the radio base station eNB determines whether or not it is necessary to perform location measurement on the mobile station UE.

If a determination is made that performing location measurement on the mobile station UE is necessary, this operation proceeds to step S410 while if a determination is made that performing location measurement on the mobile station UE is not necessary, this operation proceeds to step S408.

In step S408, the radio base station eNB obtains identification information of a visitor cell of the mobile station UE (cell ID) from the database and the like as the location measurement result for the mobile station UE and transmits the "Location Response" containing the cell ID to the mobile switching center MME.

In step S410, the radio base station eNB instructs the mobile station UE to perform location measurement on the mobile station UE.

### (Operation and Effect of the mobile communication system according to the first embodiment of the present invention)

According to the mobile communication system according to the first embodiment of the present invention, if simple location measurement is conducted on the mobile station UE, since it becomes unnecessary for the server device ESMLC participation, and so it is possible to avoid wasting server device ESMLC processing performance.

According to the mobile communication system according to the first embodiment of the present invention, if the simple location measurement on the mobile station UE is sufficient as an LCS result, it becomes possible to shorten the notification time for the LCS client to receive the location measurement result for the mobile station UE.

According to the mobile communication system according to the first embodiment of the present invention, the radio base station eNB does not need to retain latitude and longitude information for each cell ID in the core network for notification of the latitude and longitude information, which simplifies the network setting information.

The characteristics of the present embodiment as described above may be expressed as follows.

A gist of a first characteristic of the present embodiment is a mobile communication method including a step in which a mobile switching center MME determines the location measurement type for a mobile station UE to be performed subject to "Provide Subscriber Location", when such "Provide Subscriber Location (first measurement request)" is received from a server device GMLC (a first server device) and a step in which the mobile switching center MME transmits "Location Request (a second location measurement request)" to a radio base station eNB when there is a determination to perform simple location measurement on the mobile station UE corresponding to "Provide Subscriber Location (the first location measurement request)" and a step in which the mobile switching center MME transmits "Location Request (a second location measurement request)" to "a server device ESMLC (the second server device)" when there is a determination to perform location measurement other than simple location measurement for the mobile station UE corresponding to "Provide Subscriber Location" and a step in which the server device ESMLC calculates the location measurement result for the mobile station UE corresponding to "Location Request" received and transmits the location measurement result to the mobile switching center MME, and a step in which the mobile switching center MME transmits the location measurement result received from the radio base station eNB or the server device ESMLC to the server device GMLC.

A gist of a second characteristic of the present embodiment is a mobile communication system including a server device GMLC, a server device ESMLC, a mobile switching center MME, and a radio base station eNB, and includes a determination unit 22 configured to determine the mobile station UE location measurement type that should be performed corresponding to "Provide Subscriber Location", when "Provide Subscriber Location" is received from the server device GMLC and a location measurement request transmission unit 24 configured to transmit "Location Request" to the server device ESMLC when a determination is made to perform simple location measurement on the mobile station UE corresponding to "Provide Subscriber Location" and to transmit Location Request to the server device ESMLC when a determination is made to perform location measurement other than simple location measurement on the mobile station UE corresponding to "Provide Subscriber Location" and a location measurement result transmission unit 25 configured to transmit the mobile station UE location measurement result received from the radio base station eNB or the server device ESMLC to the server device GMLC, and the radio base station eNB includes a location measurement unit 33 configured to perform simple location measurement on the mobile station UE corresponding to "Location Request" received and a location measurement result transmission unit 35 configured to transmit the location measurement result to the mobile switching center MME, and the server device ESMLC includes a calculation unit 42 configured to calculate the location measurement result for the mobile station UE corresponding to "Location Request" received and a location measurement result transmission unit 43 configured to transmit the location measurement result to the mobile switching center MME.

A gist of a third characteristic of the present embodiment is a mobile switching center MME including a determination unit 22 configured to determine the mobile station UE location measurement type that must be performed corresponding to "Provide Subscriber Location", when "Provide Subscriber Location" is received from a server device GMLC and a location measurement request transmission unit 24 configured to transmit "Location Request" to the radio base station eNB when a determination is made to perform simple location measurement on the mobile station UE corresponding to "Provide Subscriber Location" and to transmit "Location Request" to the server device ESMLC when a determination is made to perform location measurement other than simple location measurement on the mobile station UE corresponding to "Provide Subscriber Location" and a location measurement result transmission unit 25 configured to transmit the mobile station UE location measurement result received from the radio base station eNB or the server device ESMLC to the server device GMLC.

In the third characteristic of the present embodiment, the determination unit 22 may be configured to determine the mobile station UE location measurement type to be performed corresponding to "Provide Subscriber Location" based on at least one of identification information for a LCS client (terminal) subject to the request of a location measurement result for the mobile station UE, a requested service quality (QoS) for the mobile station UE location measurement result or a visitor area of the mobile station UE.

In the third characteristic of the present embodiment, the determination unit 22 may be configured to determine that the mobile station UE location measurement type designated by "Provide Subscriber Location" is the mobile station UE location measurement type that is to be performed corresponding to "Provide Subscriber Location".

In the third characteristic of the present embodiment, The mobile switching center MME including a predetermined calculation request unit 26 may be configured to request performance of a predetermined calculation for the server device ESMLC, when a determination is made to perform predetermined calculations based on the location measurement result received from the radio base station eNB and the location measurement result transmission unit 25 is configured to transmit the predetermined calculation result received from the server device ESMLC to the server device GMLC as the location measurement result.

A gist of a fourth characteristic of the present embodiment is the server device GMLC including a determination unit 14 configured to determine the mobile station UE location measurement type to be performed corresponding to the measurement request when "LCS Service Request" is received from LCS client (a request-source terminal) and a location measurement request transmission unit 14 configured to transmit "Provide Subscriber Location" to request performance of the mobile station UE simple location measurement to the mobile switching center MME, when a determination is made to perform the mobile station UE simple location measurement corresponding to "LCS Service Request" and a location measurement result transmission unit 15 configured to transmit the mobile station UE location measurement result received from the mobile switching center MME to the LCS client.

In the fourth characteristic of the present embodiment, the determination unit 12 may be configured to determine the mobile station UE location measurement type to be performed corresponding to "LCS Service Request" based on at least one of identification information of a LCS client (terminal) requesting the location measurement result for the mobile station UE, a requested service quality (QoS) for the mobile station UE location measurement result, or a visitor area of the mobile station UE.

A gist of a fifth characteristic of the present embodiment is a radio base station eNB including a location measurement unit 33 configured to obtain at least one of the identification information or latitude and longitude information of a visitor cell of the mobile station UE as location measurement for the mobile station UE, when "Geographical Area" is set in the "Location Request" received from the mobile switching center MME and a mobile station UE simple location measurement is requested by the location request and a location measurement result transmission unit 35 configured to transmit the mobile station UE location measurement result to the mobile switching center MME and an indicator unit 34 configured to indicate performance of the mobile station UE location measurement for the mobile station UE, when a determination is made that location measurement is required for the mobile station UE when a geographical area is not set in the location request received and the location measurement unit 33 is configured to obtain the identification information of a visitor cell of the mobile station UE as the location measurement result for the mobile station UE when a determination is made that location measurement for the mobile station UE is not required when "Geographical Area" is not set in "Local Request" received.

It is noted that the operation of the above-described the notification time for the LCS client, the server device GMLC, the server device HSS, the server device ESMLC, the mobile switching center MME, the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the notification time for the LCS client, the server device GMLC, the server device HSS, the server device ESMLC, the mobile switching center MME, the radio base station eNB or the mobile station UE. Further, such a storage medium or a processor may be arranged, as a discrete component, in the notification time for the LCS client, the server device GMLC, the server device HSS, the server device ESMLC, the mobile switching center MME, the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method, comprising:
a step in which a mobile switching center determines the location measurement type for a mobile station to be performed subject to a first measurement request, when such first measurement request is received from a first server device;
a step in which the mobile switching center transmits a second location measurement request to a radio base station when there is a determination to perform simple location measurement on the mobile station corresponding to the first location measurement request;
a step in which the mobile switching center transmits a second location measurement request to the second server device when there is a determination to perform location measurement other than simple location measurement for the mobile station corresponding to the first location measurement request;
a step in which the radio base station performs simple location measurement for the mobile station corresponding to the second measurement request received and transmits the location measurement result to the mobile switching center;
a step in which the second server device calculates the location measurement result for the mobile station corresponding to the second location measurement request received and transmits the location measurement result to the mobile switching center; and
a step in which the mobile switching center transmits the location measurement result received from the radio base station or the second server device to the first server device.

2. A mobile communication system, comprising: a first server device; a second server device; a mobile switching center; and a radio base station, wherein
the mobile switching center includes:
a determination unit configured to determine the mobile station location measurement type that should be performed corresponding to the first measurement request, when the first measurement request is received from the first server device;
a location measurement request transmission unit configured to transmit the second location measurement request to the radio base station when a determination is made to perform simple location measurement on the mobile station corresponding to the first location measurement request and to transmit the second location measurement request to the second server device when a determination is made to perform location measurement other than simple location measurement on the mobile station corresponding to the first location measurement request; and
a location measurement result transmission unit configured to transmit the mobile station location measurement result received from the radio base station or the second server device to the first server device; and
the radio base station includes:
a location measurement unit configured to perform simple location measurement on the mobile station corresponding to the second location measurement request received; and
a location measurement result transmission unit configured to transmit the location measurement result to the mobile switching center, and
the second server device includes:
a calculation unit configured to calculate the location measurement result for the mobile station corresponding to the second location measurement request received; and
a location measurement result transmission unit configured to transmit the location measurement result to the mobile switching center.

3. A mobile switching center, comprising:
a determination unit configured to determine the mobile station location measurement type that must be performed corresponding to the first measurement request, when the first measurement request is received from a first server device;
a location measurement request transmission unit configured to transmit the second location measurement request to the radio base station when a determination is made to perform simple location measurement on the mobile station corresponding to the first location measurement request and to transmit the second location measurement request to the second server device when a determination is made to perform location measurement other than simple location measurement on the mobile station corresponding to the first location measurement request; and
a location measurement result transmission unit configured to transmit the mobile station location measurement result received from the radio base station or the second server device to the first server device.

4. The mobile switching center according to claim 3, wherein the determination unit is configured to determine the mobile station location measurement type to be performed corresponding to the first measurement request based on at least one of identification information for a terminal subject to the request of a location measurement result for the mobile station, a requested service quality for the mobile station location measurement result or a visitor area of the mobile station.

5. The mobile switching center according to claim 3, wherein the determination unit is configured to determine that the mobile station location measurement type designated by the first location measurement request is the mobile station location measurement type that is to be performed corresponding to the first measurement request.

6. The mobile switching center according to claim 3, further comprising:
a predetermined calculation request unit configured to request performance of a predetermined calculation for the second server device, when a determination is made to perform predetermined calculations based on the location measurement result received from the radio base station, wherein
the location measurement result transmission unit is configured to transmit the predetermined calculation result received from the second server device to the first server device as the location measurement result.

7. A server device, comprising:
a determination unit configured to determine the mobile station location measurement type to be performed corresponding to the measurement request when a measurement request is received from a request-source terminal;
a location measurement request transmission unit configured to transmit a first location measurement request to request performance of the mobile station simple location measurement to the mobile switching center, when a determination is made to perform the mobile station simple location measurement corresponding to the location measurement request; and
a location measurement result transmission unit configured to transmit the mobile station location measurement result received from the mobile switching center to the request-source terminal.

8. The server device according to claim 7, wherein the determination unit is configured to determine the mobile station location measurement type to be performed corresponding to the measurement request based on at least one of identification information of a terminal requesting the location measurement result for the mobile station, a requested service quality for the mobile station location measurement result, or a visitor area of the mobile station.

9. A radio base station, comprising: a location measurement unit configured to obtain at least one of the identification information or latitude and longitude information of a visitor cell of the mobile station as location measurement for the mobile station, when a geographical area is set in the location measurement request received from the mobile switching center and a mobile station simple location measurement is requested by the location measurement request;
a location measurement result transmission unit configured to transmit the mobile station location measurement result to the mobile switching center; and
an indicator unit configured to indicate performance of the mobile station location measurement for the mobile station, when a determination is made that location measurement is required for the mobile station when a geographical area is not set in the location measurement request received, wherein
the location measurement unit is configured to obtain the identification information of a visitor cell of the mobile station as the location measurement result for the mobile station when a determination is made that location measurement for the mobile station is not required when a geographical area is not set in the location measurement request received.
